# EUROPÄISCHE PATENTANMELDUNG

(11) **EP 4 134 182 A1**
(43) Veröffentlichungstag der Anmeldung: **15.02.2023**
(21) Anmeldenummer: 22189463.7
(22) Anmeldetag: 09.08.2022
(51) Int. Cl.: B21D 5/08, B21D 5/00, G05B 13/00, G05B 19/18

(54) **ROLLPROFILIERVERFAHREN**

(30) Priorität: 10.08.2021 DE 102021208675
(71) Anmelder: Fraunhofer-Gesellschaft zur Förderung der angewandten Forschung e.V., 80686 München (DE)
(72) Erfinder: Richter-Trummer, Valentin, 09126 Chemnitz (DE); Ahrens, Antje, 09126 Chemnitz (DE); Abdolmohammadi, Tina, 09126 Chemnitz (DE); Schaffrath, Robert, 09126 Chemnitz (DE); Werner, Markus, 09126 Chemnitz (DE)
(74) Vertreter: Pfenning, Meinig & Partner mbB

(57) **Zusammenfassung**

Die vorliegende Erfindung betrifft ein Rollprofilierverfahren bei dem ein zu bearbeitendes Werkstück (1) in einem ersten Umformprozessschritt zumindest bereichsweise mittels Rollprofilieren entlang einer Umformbahn (2) durch einen Bearbeitungskopf (3) einer Umformvorrichtung umgeformt wird. Mittels mindestens eines Sensors (4) der Umformvorrichtung werden Reaktionskräfte des Werkstücks (1), die infolge des Umformprozessschritts auftreten, als Sensordaten ermittelt und aus den Sensordaten wird durch eine Steuereinheit (5) der Umformvorrichtung ein Bahnkorrekturvorschlag für eine korrigierte Umformbahn ermittelt. Das Werkstück (1) wird anhand des ermittelten Bahnkorrekturvorschlags in einem weiteren Umformprozessschritt entlang der korrigierten Umformbahn erneut umgeformt.

## Beschreibung

Die vorliegende Erfindung betrifft ein Rollprofilierverfahren und eine Umformvorrichtung zum Durchführen des Rollprofilierverfahrens.

Umformverfahren werden vermehrt auch mittels Robotern durchgeführt, wobei eine gewünschte Umformung des Werkstücks in der Regel aufgrund dessen inhärenter Nachgiebigkeit nur ungenügend erreicht wird und eine Nachbearbeitung nötig ist. Auch bei nicht roboterbasierten Verfahren werden hierfür beispielsweise Rolleneinstellungen am Walzgerüst bei Rollprofilierverfahren erfahrungsbasiert oder situativ entwickelt und anschließend manuell im Prozess nachjustiert, bis das gewünschte Ergebnis erreicht wird. Hierfür wird üblicherweise eine beträchtliche Einlaufzeit und entsprechende Materialmenge benötigt. Simulationsbasierte Prozessentwicklungen bringen auch allenfalls eine beschleunigte Anlernphase. Zwar kann versucht werden, die wirkenden Prozesskräfte zu messen und entsprechende Korrekturen vorzuschlagen, wie dies beispielsweise im Patent EP 0 738 200 B1 geschieht, allerdings ist in diesen Fällen der Messaufwand oftmals unverhältnismäßig hoch und es kann auch keine zeitnahe Anpassung des Umformverfahrens durchgeführt werden. Außerdem erlaubt das dort beschriebene Verfahren lediglich eine Anpassung der Maschinenparameter für ansonsten bekannte Bauteile auf Basis veränderter Kraftwerte aufgrund von beispielsweise Dickenvarianzen.

Der vorliegenden Erfindung liegt daher die Aufgabe zugrunde, ein Verfahren und eine Vorrichtung vorzuschlagen, mit denen die genannten Nachteile vermieden werden und eine optimierte Umformung eines Werkstücks bzw. Bauteils zeit- und kosteneffizient erreichbar ist.

Diese Aufgabe wird erfindungsgemäß gelöst durch ein Verfahren nach Anspruch 1 und eine Vorrichtung nach dem nebengeordneten Anspruch. Vorteilhafte Ausgestaltungen und Weiterbildungen sind in den abhängigen Ansprüchen beschrieben.

Bei einem Rollprofilierverfahren wird ein zu bearbeitendes Bauteil oder Werkstück, typischerweise ein Blech aus einem metallischen Werkstoff, in einem ersten Umformprozessschritt zumindest bereichsweise mittels Rollprofilieren entlang einer Umformbahn durch einen Bearbeitungskopf einer Umformvorrichtung umgeformt. Dabei werden mittels eines Sensors der Umformvorrichtung Reaktionskräfte des Werkstücks, die infolge des ersten Umformprozessschritts auftreten, als Sensordaten ermittelt und es wird aus den Sensordaten durch eine Steuereinheit der Umformvorrichtung ein Bahnkorrekturvorschlag für eine korrigierte Umformbahn ermittelt. Das Werkstück wird dann anhand des ermittelten Bahnkorrekturvorschlags in einem weiteren Umformprozessschritt entlang der korrigierten Umformbahn erneut umgeformt, was typischerweise mit dem gleichen Bearbeitungskopf erfolgt. Es kann aber auch vorgesehen sein, für das Umformen entlang der korrigierten Umlaufbahn einen anderen Bearbeitungskopf zu verwenden, der jedoch von der gleichen Steuereinheit gesteuert wird.

Durch die Messung der Reaktionskräfte auf das Umformen bereits beim ersten Abfahren der Umformbahn wird, selbst bei nicht genauer bekannten Werkstückeigenschaften, eine nachfolgende Einstellung der Bahn ermöglicht. Hierbei wird ein Rollprofilierverfahren verwendet, durch das eine zuverlässige Umformung des Werkstücks bei in der Regel mehrmaligem Abfahren der Umformbahn erreicht wird. Da entsprechende Umformvorrichtung bzw. entsprechende Roboter oftmals ohnehin Kraftsensorik bzw. eine Kraftmesseinheit aufweisen, ist lediglich eine entsprechende Aufbereitung durch die Steuereinheit nötig, um in einem weiteren bzw. zweiten Umformprozessschritt mit einer optimierten Umformbahn das gewünschte Ergebnis zu erreichen. Somit wird gegenüber herkömmlichen Umformverfahren sowohl eine schnellere Umformung als auch eine qualitativ hochwertige Umformung mit hoher Kosteneffizienz bei kleinsten Stückzahlen erreicht.

Es kann vorgesehen sein, dass nach dem ersten Umformprozessschritt die Umformbahn in entgegengesetzter Richtung erneut abgefahren wird und dabei durch den mindestens einen Sensor die Reaktionskräfte wiederum ermittelt werden. Hierdurch wird zwar die Verfahrensdauer erhöht, allerdings auch eine höhere Genauigkeit der Sensordaten und eine entsprechende bessere Optimierung der korrigierten Umformbahn erreicht. Bei dem Abfahren in entgegengesetzter Richtung kann sowohl ein erneutes Umformen durchgeführt werden als auch ein Abfahren ohne Umformwirkung, um die wirkenden Kräfte zu ermitteln. Unter dem Begriff "erstes Abfahren" kann hierbei sowohl das einmalige Abfahren der Umformbahn in einer Richtung verstanden werden als auch das einmalige Abfahren der Abfahren in einer Richtung und das einmalige Abfahren der Umformbahn in umgekehrter Richtung.

Zeitlich vor dem ersten Umformprozessschritt kann die Umformbahn ohne Werkstück abgefahren werden, wobei der mindestens eine Sensor Schwerkrafteffekte ermittelt, die nachfolgend zum Ermitteln des Bahnkorrekturvorschlags verwendet werden. Alternativ oder zusätzlich kann auch ein Schwerkraftsensor an dem Bearbeitungskopf und bzw. oder dem die Reaktionskräfte messenden Sensor benachbart angeordnet sein. Durch das Herausrechnen von auch ohne Werkstück auftretenden Effekten wie den genannten Schwerkrafteffekten kann eine höhere Präzision der korrigierten Umlaufbahn und somit eine verbesserte Anpassung erreicht werden.

Es kann auch vorgesehen sein, das ein gesamter möglicher Bewegungsraum des Bearbeitungskopfs der Umformvorrichtung, also alle von dem Bearbeitungskopf erreichbaren Raumpositionen oder zumindest eine Referenzbahn innerhalb dieses Bearbeitungsraums, vor dem Abfahren der Umformbahn ohne Werkstück angefahren wird und hierbei vorzugsweise Koordinaten, Pose und bzw. oder Kraftwert an verschiedenen Stellen aufgezeichnet werden. Die Bewegungsbahn zum Abfahren der Umformbahn ohne Werkstück wird dann typischerweise rechnerisch, also insbesondere durch die Steuereinheit, aus Daten des Bewegungsraums des Bearbeitungskopfs, vorzugsweise aus den gemessenen Kraftwerten, ermittelt.

Um das Rollprofilierverfahren schneller durchzuführen kann auch vorgesehen sein, dass der erste Umformprozessschritt zum Beispiel zum Ermitteln von Eigenspannungen des Werkstücks oder anderer Abweichungen von einer Sollgeometrie, wie Änderungen in der Werkstückdicke oder Änderungen aufgrund vorhergegangener Prozessschritte wie wärmebasierter Auslagerungen, die das Materialgefüge verändern, nur entlang einer Strecke von maximal 10 Prozent (insbesondere sofern ein über die Länge des Bauteils konstanter Querschnitt gefertigt wird und das Bauteil sehr lang ist, also typischerweise die Bauteillänge mindestens das Zehnfache der Länge des Bearbeitungskopfs beträgt), vorzugsweise 20 Prozent, besonders vorzugsweise 35 Prozent der Länge des Werkstücks und bzw. oder 10 Prozent, vorzugsweise 20 Prozent, besonders vorzugsweise 35 Prozent der Breite des Werkstücks durchgeführt wird und basierend auf den ermittelten Sensordaten der Bahnkorrekturvorschlag ermittelt wird. Hierbei werden in der Regel bereits ausreichend Informationen erhalten, um nachfolgend die korrigierte Umlaufbahn zu ermitteln. In besonders bevorzugter Weise werden hierbei der Bauteilanfang und das Bauteilende erfasst und die ermittelten Werte jeweils geteilt.

Alternativ oder zusätzlich kann durch einen am Bearbeitungskopf angeordneten Sensor zum Erfassen einer Bauteilgeometrie, vorzugsweise einen Laserlinienscanner, ein Umformzustand des Werkstücks als Messdaten optisch gemessen und anschließend diese Messdaten an die Steuereinheit übermittelt werden. Hierdurch wird eine höhere Genauigkeit erreicht, da durch ein alternatives Messsystem, das zudem direkt Informationen über die Geometrie des Werkstücks liefert, zusätzliche Daten zur Verfügung stehen und Fehler vermieden werden.

Eine Umformvorrichtung, die zum Durchführen eines Rollprofilierverfahrens eingerichtet ist, weist einen Bearbeitungskopf, mindestens einen Sensor und eine Steuereinheit auf. Der Bearbeitungskopf ist eingerichtet, ein zu bearbeitendes Werkstück in einem ersten Umformprozessschritt zumindest bereichsweise mittels Rollprofilieren entlang einer Umformbahn umzuformen. Der mindestens eine Sensor ist dazu ausgebildet, aus den Sensordaten einen Bahnkorrekturvorschlag für die Umformbahn zu ermitteln. Der Bearbeitungskopf schließlich ist dazu eingerichtet, das Werkstück anhand des ermittelten Bahnkorrekturvorschlags in einem weiteren Umformprozessschritt entlang einer korrigierten Umformbahn erneut umzuformen.

Der mindestens eine Sensor kann an dem Bearbeitungskopf angeordnet sein, um schnell und effizient die Sensordaten nahe am Werkstück aufnehmen zu können. Es kann auch vorgesehen sein, das die Umformvorrichtung als Roboter ausgebildet ist, wobei der Bearbeitungskopf ein Endeffektor eines Roboterarms ist und der mindestens eine Sensor an dem Bearbeitungskopf angeordnet ist. Durch Verwenden beispielsweise eines Sechsachsroboters kann ein nahezu beliebiger Verlauf der Umformbahn erreicht werden und somit eine effiziente Bearbeitung beliebiger Werkstücke. Der mindestens eine Sensor ist typischerweise als Kraftsensor und bzw. oder als Drehmomentsensor ausgebildet. Es ist aber auch möglich, den Sensor an einer anderen Position anzuordnen, beispielsweise zwischen dem Roboterarm und dem Endeffektor.

Es kann vorgesehen sein, dass ein Sensor zum Erfassen einer Bauteilgeometrie, vorzugsweise ein Laserlinienscanner, am Bearbeitungskopf angeordnet und dazu ausgebildet ist, einen Umformzustand des Werkstücks als Messdaten optisch zu messen und diese Messdaten an die Steuereinheit zu übermitteln. Die Steuereinheit kann basierend darauf fortlaufend und praktisch in Echtzeit, d. h. mit einer Zeitverzögerung von typischerweise maximal 0,1 s, vorzugsweise mit einer Verzögerung in Größe der Interpolationszeit des gegebenenfalls verwendeten Roboters, die typischerweise 4 ms beträgt, die Umformbahn korrigieren bzw. anpassen.

Das beschriebene Rollprofilierverfahren ist typischerweise mit der beschriebenen Umformvorrichtung durchführbar, d. h. die beschriebene Umformvorrichtung ist zum Durchführen des beschriebenen Rollprofilierverfahrens ausgebildet.

Ein Computerprogrammprodukt enthält eine Befehlsfolge bzw. ein Programm, die eine Umformvorrichtung mit den beschriebenen Eigenschaften ansteuert und bzw. oder ein Verfahren mit den beschriebenen Eigenschaften durchführt, wenn die Befehlsfolge in der Steuereinheit der Umformvorrichtung, die auch als Recheneinheit bezeichnet werden kann, durchgeführt wird.

Ausführungsbeispiele der Erfindung sind in den Zeichnungen dargestellt und werden nachfolgend anhand der Figuren 1 bis 3 erläutert.

Es zeigen:
- Fig. 1: eine schematische Ansicht eine Werkstücks mit Umformvorrichtung bei Durchlaufen der Umformbahn;
- Fig. 2: eine Figur 1 entsprechende Ansicht nach Durchlaufen der Umformbahn und
- Fig. 3: eine Figur 1 entsprechende Ansicht bei einem Durchlaufen der Umformbahn in entgegengesetzter Richtung.

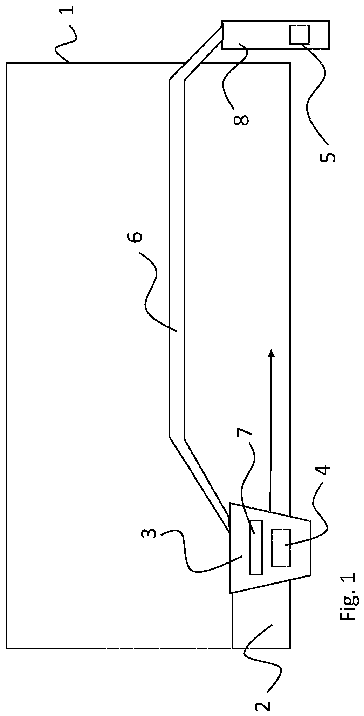

In Figur 1 ist in einer schematischen und nicht maßstabsgerechten Ansicht ein Werkstück 1, im dargestellten Ausführungsbeispiel ein Metallblech, gezeigt, das mittels eines Umformverfahrens umgeformt werden soll. Hierzu wird entlang einer Umformbahn 2, die im dargestellten Ausführungsbeispiel eine geradlinig verlaufende Bahn am unteren Rand des Werkstücks 1 ist, in weiteren Ausführungsbeispielen aber auch andere Formen haben kann, das ebene Werkstück 1 mit einem Bearbeitungskopf 3 für ein Rollprofilierverfahren abgefahren und durch von Rollen des Bearbeitungskopfs 3 ausgeübte Kräfte entlang der Umformbahn 2 umgeformt. An dem Bearbeitungskopf 3 ist ein Sensor 4 als Kraftsensor angeordnet, der während des Abfahrens der Umformbahn 2 Reaktionskräfte des Werkstücks 1 auf den Umformvorgang ermittelt. Zusätzlich ist an dem Bearbeitungskopf 3 ein Laserlinienscanner 7 vorgesehen, der optisch den aktuellen Umformzustand des Werkstücks 1 bzw. der Umformbahn 2 misst. Die Sensordaten und die optisch ermittelten Messdaten des Laserlinienscanners 7 werden an eine Steuereinheit 5 weitergeleitet. In weiteren Ausführungsbeispielen kann der Laserlinienscanner 7 aber auch nicht am Bearbeitungskopf 3 vorhanden sein.

Die schematisch in Figur 1 gezeigte Umformvorrichtung 8 mit dem Bearbeitungskopf 3, dem Sensor 4, dem Laserlinienscanner 7 und der Steuereinheit 5 ist im dargestellten Ausführungsbeispiel ein Roboter mit einem Sechsachsarm 6. Der Bearbeitungskopf 3 ist ein Endeffektor des Roboterarms 6 und die Sensordaten sowie die optisch ermittelten Messdaten des Laserlinienscanners 7 können über entsprechende Datenleitungen des Roboterarms 6 bzw. drahtlos an die in einem Grundgehäuse der Umformvorrichtung 8 angeordnete Steuereinheit 5, die auch als Steuer-/Regelungseinheit bzw. Recheneinheit oder Auswerteeinheit ausgebildet sein kann oder entsprechend bezeichnet werden kann, übermittelt. Auf der Steuereinheit 5 als Computer ist ein Programm gespeichert, durch das die Umformvorrichtung angesteuert wird bzw. durch das das beschriebene Verfahren durchgeführt wird, wenn das Programm ausgeführt wird.

Durch die Steuereinheit 5 wird ein Bahnkorrekturvorschlag für eine korrigierte Umformbahn berechnet bzw. ermittelt und das Werkstück 1 anhand des ermittelten Bahnkorrekturvorschlags in einem weiteren Umformprozessschritt entlang der korrigierten Umformbahn erneut umgeformt. Das Verfahren ist somit ein intelligenter robotergestützter Rollprofilierprozess bzw. ein intelligentes robotergestütztes Rollprofilierverfahren mit automatisch generiertem Bahnkorrekturvorschlag zum Erreichen einer gewünschten Geometrie insbesondere bei Einzelstückfertigung auf Basis eines Kraftverlaufs im Prozess.

Die Reaktionskräfte des Werkstücks 1, die auf den Bearbeitungskopf 3 als Werkzeug wirken, sowohl während der Umformung als auch in einem weiteren Bearbeitungsschritt ohne wirkende Umformkräfte, können hierbei gemessen werden. Insbesondere kann zeitlich vor dem ersten Umformprozessschritt, also dem erstmaligen Abfahren der Umformbahn 2 auf dem Werkstück 1, die Umformbahn 2 ohne Werkstück 1 abgefahren werden, wobei der Sensor 4 Schwerkrafteffekte ermittelt, um die im Anschluss der Bahnkorrekturvorschlag korrigiert wird. Es wird also die geplante Umformbewegung zusätzlich ohne das Werkstück 1 aber in derselben Ausrichtung im Raum ausgeführt, die Kraftwerte dieser Leerlaufbewegung aufgezeichnet und anschließend von Umformschritt mit dem Werkstück 1 abgezogen. Diese Leerlaufbewegung kann zeitlich vor dem ersten Umformprozessschritt, aber auch nach dem ersten Umformprozessschritt und vor dem Durchführen des weiteren Umformprozessschritts mit korrigierter Umformbahn erfolgen. So können Umformkräfte isoliert werden.

Prinzipiell ist es auch möglich, den gesamten Arbeitsraum des Roboterarms 6 oder zumindest eine einzelne Referenzbahn innerhalb des Arbeitsraums vor Durchführen des Umformprozessschritts bzw. Umformschritts einmal abzufahren, um aus den gewonnenen Daten beliebige Referenzbahnen zu generieren. Mit dem beschriebenen Verfahren können insbesondere auch Werkstücke mit unbekannten Materialkennwerten oder Eigenspannungen bzw. Werkstücke mit variablen Eigenschaften entlang einer umzuformenden Kante bearbeitet werden. Es wird dabei ein inkrementelles Verfahren angewandt, bei dem nach einer initialen Umformbahn 2 mindestens eine, in der Regel aber mehrere korrigierte Umformbahnen berechnet und abgefahren werden, bis das Werkstück 1 wie gewünscht umgeformt ist. Dabei kann auf in der Regel ohnehin am Roboterarm 6 vorhandene Sensorik zurückgegriffen werden, es muss also typischerweise kein zusätzlicher Sensor installiert werden. Zusammenfassend wird somit ein robotergestütztes Rollprofilieren, gerade auch von Einzelstücken, erreicht mit dem Ziel einer hohen Umformqualität trotz eventuell nicht genau bekannter Bauteilzustände vor dem Umformen, wie beispielsweise unbekannte vorhandene Eigenspannungen im Blech).

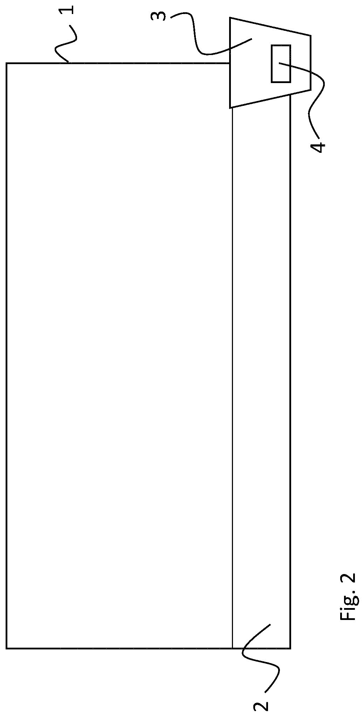

In Figur 2 ist in einer Figur 1 entsprechenden Ansicht das Werkstück 1 mit dem Bearbeitungskopf 3 nach Abfahren der Umformbahn 2 dargestellt, d. h. der Bearbeitungskopf 3 hat das Ende des Werkstücks 1 erreicht. Wiederkehrende Merkmale sind in dieser Figur wie auch in der folgenden Figur mit identischen Bezugszeichen versehen. Lediglich aus Gründen der besseren Übersichtlichkeit wurden der Laserlinienscanner 7, der Roboterarm 6 und die Steuereinheit 5 nicht mehr dargestellt, sind jedoch immer noch wie in Figur 1 gezeigt und im Zusammenhang damit beschrieben mit dem Bearbeitungskopf 3 verbunden.

Nach dem ersten Umformprozessschritt wirken durch den Rollensatz des Bearbeitungskopfs 3 eingebrachte Umformkräfte in allen Raumrichtungen auf das Werkstück 1. Nach Abschluss dieser Umformstufe hat das Werkstück 1 eine Geometrie, die der Einstellung des Bearbeitungskopfs 3 abzüglich einer elastischen Umformung und beeinflusst durch etwaige Eigenspannungen im Blech entspricht.

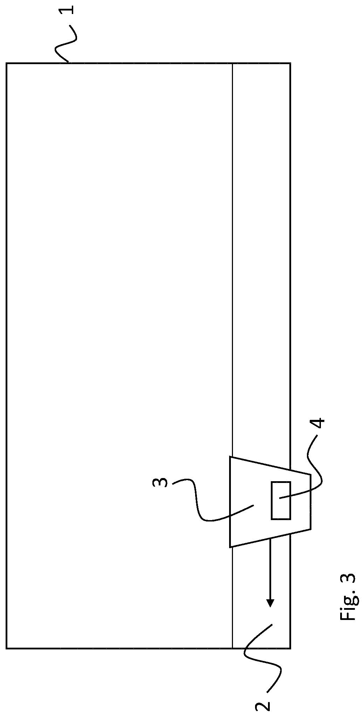

In Figur 3 ist in einer wiederum den Figuren 1 und 2 entsprechenden Ansicht dargestellt, wie die Umformbahn 2 in entgegengesetzter Richtung erneut abgefahren wird und dabei durch den mindestens einen Sensor 4 die Reaktionskräfte wiederum ermittelt werden. Die umgeformte Kante wird somit praktisch nochmals mit dem Bearbeitungskopf 3 als Werkzeug mit gleichbleibenden Einstellungen abgefahren (die Bahn würde in diesem Fall der Sollgeometrie des jeweiligen Verfahrensschritts entsprechen), was in weiteren Ausführungsbeispielen allerdings auch ausgelassen werden kann und gleich die korrigierte Umformbahn bzw. optimierte Umformbahn abgefahren werden kann. Bei dieser Rückwärtsbewegung werden also die Umformkräfte von denselben Kräften bei der Vorwärtsbewegung abgezogen, so dass der Kraftverlauf entlang der Umformkante isoliert werden kann, der für die generierte plastische Umformung verantwortlich ist. Bei der in Figur 3 dargestellten Rückwärtsfahrt werden von dem als Kraftsensor oder Drehmomentensensor ausgebildeten Sensor 4 wiederum Kräfte in allen Raumrichtungen aufgezeichnet. Bei einem perfekt umgeformten Blech als das Werkstück 1 wäre zu erwarten, dass das Blech keinerlei (oder nur im Rahmen der Rollenreibung sowie Messfehlergröße) Kräfte auf das Werkzeug ausübt. Bei real umgeformten Blechen wird das Blech jedoch einerseits aufgrund seiner elastischen Rückformung und andererseits aufgrund von nicht vorhersehbaren lokalen Eigenschaften von der theoretischen Geometrie abweichen und somit eine messbare Kraft auf den Bearbeitungskopf 3 als Werkzeug ausüben. Es ist zudem auch möglich, durch die Steuereinheit 5 beim Berechnen der korrigierten Umformbahn die elastische Rückfederung, sofern diese bekannt ist, von der Werkzeugeinstellung abzuziehen, also beispielsweise einen Gradwert als Werkzeugeinstellung entsprechend zu korrigieren.

Die gemessenen Kräfte entlang der Umformlinie bei der Umformung sowie nach der Umformung bei beibehaltener Werkzeugeinstellung können genutzt werden, um den Verlauf der korrigierten Umformbahn entlang der Umformkante zu steuern.

Es wird somit ein robotergestützter Prozess durchgeführt, bei dem ein einzelner Rollensatz des Bearbeitungskopfs 3 mehrfach über das Werkstück 1 bzw. Bauteil geführt wird und bei der jeweils nächsten Bahn bzw. Umformbahn auf die zuvor gemessenen Kräfte reagiert wird. Neben einem robotergestützten Prozess bzw. Verfahrens kann das beschriebene Verfahren auch auf einer konventionellen Walzprofilieranlage durchgeführt werden, wo das Werkstück 1 mehrere Walzgerüste durchfährt. Die Steuereinheit 5 justiert in diesem Fall den jeweils nächsten Rollensatz minimal nach, um die Werkstückqualität zu optimieren. Dies würde zwar in höheren Anlagekosten resultieren, allerdings sind die Durchlaufzeiten erheblich kürzer.

In einem weiteren Ausführungsbeispiel können auch nur wenige Zentimeter der Umformbahn 2 genutzt werden, um erste Informationen über das Werkstück 1 zu sammeln. Typischerweise wird hierbei der Bearbeitungskopf 3 um maximal 10 Prozent der Länge des Werkstücks 1 entlang der Umformbahn 2 verfahren. Beispielsweise können Rollen des Bearbeitungskopfs 3 nicht von Beginn an auf den zu erzielenden Winkel für einen bestimmten Umformabschnitt eingestellt sein, sondern mit einem anderen Winkel, beispielsweise dem einer vorhergehenden Bahn, beginnen und sich sukzessive auf den gewünschten Winkel einstellen. Dies kann auch auf einer verkürzten Vor- und Rückwärtsfahrt erreicht werden, wodurch sich die Wahrscheinlichkeit reduziert, dass die Rollen bei einem zu starken Winkelwechsel vom Blech rutschen und zudem die Gesamtprozesszeit reduziert wird, da die Umformbahn 2 nicht mehr mit dem geplanten Winkel, sondern direkt mit dem korrigierten Winkel gefahren werden kann. Bei der korrigierten Umformbahn werden typischerweise die Größen Gewichtskraft, Prozesskraft und bzw. oder Rückfederungskraft beim Durchfahren der ersten Umformbahn 2 ermittelt und zum Korrigieren verwendet. Das in den Figuren 1-3 gezeigte Abfahren der Umformbahn kann natürlich in gleicher Weise auch mit der korrigierten Umformbahn entsprechend erfolgen, d. h. die in den Figuren wiedergegebene Umformbahn 2 muss nicht die initiale Umformbahn, sondern kann auch bereits die korrigierte Umformbahn sein.

Der Fokus der beschriebenen Erfindung liegt somit insbesondere auf einer Einzelstückfertigung innerhalb der zu erreichenden Toleranzen bzw. auf geringsten Stückzahlen und einer Vielzahl unterschiedlicher Geometrien. Aus wirtschaftlichen Gründen muss hier der Programmieraufwand einer Vorrichtung zum Durchführen des Verfahrens eliminiert oder zumindest minimiert werden.

Lediglich in den Ausführungsbeispielen offenbarte Merkmale der verschiedenen Ausführungsformen können miteinander kombiniert und einzeln beansprucht werden.

## Patentansprüche

1. Rollprofilierverfahren bei dem
ein zu bearbeitendes Werkstück (1) in einem ersten Umformprozessschritt zumindest bereichsweise mittels Rollprofilieren entlang einer Umformbahn (2) durch einen Bearbeitungskopf (3) einer Umformvorrichtung umgeformt wird, wobei
mittels mindestens eines Sensors (4) der Umformvorrichtung Reaktionskräfte des Werkstücks (1), die infolge des Umformprozessschritts auftreten, als Sensordaten ermittelt werden und
aus den Sensordaten durch eine Steuereinheit (5) der Umformvorrichtung ein Bahnkorrekturvorschlag für eine korrigierte Umformbahn ermittelt wird und
das Werkstück (1) anhand des ermittelten Bahnkorrekturvorschlags in einem weiteren Umformprozessschritt entlang der korrigierten Umformbahn erneut umgeformt wird.

2. Rollprofilierverfahren nach Anspruch 1, **dadurch gekennzeichnet, dass** nach dem ersten Umformprozessschritt die Umformbahn in entgegengesetzter Richtung erneut abgefahren wird und dabei durch den mindestens einen Sensor (4) die Reaktionskräfte wiederum ermittelt werden.

3. Rollprofilierverfahren nach einem der vorhergehenden Ansprüche, **dadurch gekennzeichnet, dass** zeitlich vor dem ersten Umformprozessschritt die Umformbahn (2) ohne Werkstück (1) abgefahren wird und der mindestens eine Sensor (4) Schwerkrafteffekte ermittelt, die nachfolgend zum Ermitteln des Bahnkorrekturvorschlags verwendet werden.

4. Rollprofilierverfahren nach Anspruch 3, **dadurch gekennzeichnet, dass** zumindest eine Referenzbahn eines gesamten Bewegungsraum des Bearbeitungskopfs (3) der Umformvorrichtung vor dem Abfahren der Umformbahn (2) ohne Werkstück (4) angefahren wird und die Bahn zum Abfahren der Umformbahn (2) ohne Werkstück (4) aus Daten des Bewegungsraums des Bearbeitungskopfs (3) ermittelt wird.

5. Rollprofilierverfahren nach einem der vorhergehenden Ansprüche, **dadurch gekennzeichnet, dass** durch einen am Bearbeitungskopf (3) angeordneten Sensor zum Erfassen einer Bauteilgeometrie, vorzugsweise einem Laserlinienscanner (7), ein Umformzustand des Werkstücks (1) als Messdaten optisch gemessen und diese Messdaten an die Steuereinheit (5) übermittelt werden.

6. Umformvorrichtung, die zum Durchführen eines Rollprofilierverfahrens eingerichtet ist, aufweisend
einen Bearbeitungskopf (3), der ausgebildet ist, ein zu bearbeitendes Werkstück (1) in einem ersten Umformprozessschritt zumindest bereichsweise mittels Rollprofilieren entlang einer Umformbahn umzuformen,
mindestens einen Sensor (4), der eingerichtet ist, Reaktionskräfte des Werkstücks (1) infolge des Umformprozessschritts zu ermitteln, und
einer Steuereinheit (5), die ausgebildet ist, aus den Sensordaten einen Bahnkorrekturvorschlag für die Umformbahn zu ermitteln, wobei
der Bearbeitungskopf (3) eingerichtet ist, das Werkstück (1) anhand des ermittelten Bahnkorrekturvorschlags in einem weiteren Umformprozessschritt entlang einer korrigierten Umformbahn erneut umzuformen.

7. Umformvorrichtung nach Anspruch 6, **dadurch gekennzeichnet, dass** die Umformvorrichung als Roboter ausgebildet ist, wobei der Bearbeitungskopf (3) ein Endeffektor eines Roboterarms (6) ist und der mindestens eine Sensor (4) an dem Bearbeitungskopf (3) angeordnet ist.

8. Umformvorrichtung nach Anspruch 6 oder Anspruch 7, **dadurch gekennzeichnet, dass** der mindestens eine Sensor (4) als ein Kraftsensor und/oder Drehmomentsensor ausgebildet ist.

9. Umformvorrichtung nach einem der Ansprüche 6-8, **dadurch gekennzeichnet, dass** ein Sensor zum Erfassen einer Bauteilgeometrie, vorzugsweise ein Laserlinienscanner (7), am Bearbeitungskopf (3) angeordnet und dazu ausgebildet ist, einen Umformzustand des Werkstücks (1) als Messdaten optisch zu messen und diese Messdaten an die Steuereinheit (5) zu übermitteln.

10. Computerprogrammprodukt, enthaltend eine Befehlsfolge, die eine Umformvorrichtung nach einem der Ansprüche 6-9 ansteuert und/oder ein Verfahren nach einem der Ansprüche 1-5 durchführt, wenn die Befehlsfolge in der Steuereinheit der Umformvorrichtung durchgeführt wird.
